(19) **Europäisches Patentamt / European Patent Office / Office européen des brevets**

(11) **EP 4 401 047 A1**

(12) **EUROPEAN PATENT APPLICATION**

(43) Date of publication:
**17.07.2024 Bulletin 2024/29**

(21) Application number: **23275010.9**

(22) Date of filing: **16.01.2023**

(51) International Patent Classification (IPC):
**G06V 10/75** (2022.01)  **G06V 10/774** (2022.01)

(52) Cooperative Patent Classification (CPC):
**G06V 10/757; G06V 10/774**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **BAE SYSTEMS plc**
**London SW1Y 5AD (GB)**

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **OBJECT CLASSIFICATION IN IMAGES**

(57) The present invention relates to image classification, in particular to object recognition/detection in images. According to an aspect of the present invention, there is provided a computer implemented method of classifying an object in an image. The method comprises: identifying, using one or more machine-learned local feature identification models, a plurality of local features of an object in the image, each local feature comprising a respective feature identity and a respective feature area; comparing the plurality of identified local features to a plurality of sets of masked images of candidate objects, wherein: each set of masked images corresponds to a respective candidate object and comprises a plurality of masked images of the respective candidate object from a plurality of viewing angles; each masked image comprises a plurality of feasible search zones for local features of the candidate object; and the comparison of the plurality of local features to a masked image of a candidate object is based on an overlap between the identified local features and feasible search zones of said candidate object in the masked image; and classifying the object in the image as one of the candidate objects based on the comparison of identified local features to a plurality of sets of masked images of candidate objects.

Figure 1

## Description

FIELD

The present invention relates to image classification, in particular to object recognition/detection in images.

BACKGROUND

Current state of the art deep learning methods are sometimes described as opaque (not explainable), brittle (not robust to scene or object variance and susceptible to adversarial attack), computationally intensive for training (thus difficult to manage if frequent updates and upgrades are required), and greedy (often requiring hundreds to millions of images for training). This can make them unsuitable for applications in contexts where there is a need for high object classification and detection accuracy, high object class variance (such as changes to colour, camouflage and the addition of new external features), and high levels of model explainability, robustness, and manageability, such as defence. These challenges can be exacerbated by limited availability of image data, especially where new object classes need to be added to the model.

SUMMARY

According to an aspect of the present invention, there is provided a computer implemented method of classifying an object in an image. The method comprises: identifying, using one or more machine-learned local feature identification models, a plurality of local features of an object in the image, each local feature comprising a respective feature identity and a respective feature area; comparing the plurality of identified local features to a plurality of sets of masked images of candidate objects, wherein: each set of masked images corresponds to a respective candidate object and comprises a plurality of masked images of the respective candidate object from a plurality of viewing angles; each masked image comprises a plurality of feasible search zones for local features of the candidate object; and the comparison of the plurality of local features to a masked image of a candidate object is based on an overlap between the identified local features and feasible search zones of said candidate object in the masked image; and classifying the object in the image as one of the candidate objects based on the comparison of identified local features to a plurality of sets of masked images of candidate objects.

The comparison of the plurality of local features to a masked image of a candidate object may be based on a weighted sum of overlap scores. Weights of the weighted sum may be based at least in part on a feature weighting indicative of a relative importance of each local feature type. Identifying the plurality of local features of an object in image may further comprise determining a confidence score for each of local features. Weights of the weighted sum may be based at least in part on the confidence scores for the identified of local features.

The comparison of the plurality of local features to a masked image of a candidate object may be based on an intersection over union measure.

The feature area associated with each local feature may comprise a bounding box of the local feature.

Each set of masked images may comprise a plurality of masked images of the respective candidate object at a plurality of viewing distances.

The method may further comprise selecting the plurality of sets of masked images of candidate objects from a superset of sets of masked images of candidate objects based on the identities of local features identified in the image.

The method may further comprise: constructing a three-dimensional model of a further candidate object; generating, from the three-dimensional model, a set of masked images of the further candidate object, the set comprising a plurality of masked images of the further candidate object, each masked image comprises a plurality of local features of the further candidate object, each local feature comprising a respective feature identity and a respective feature area; and adding the set of masked images of the further candidate object to the plurality of sets of masked images of candidate objects.

The one or more machine-learned local feature identification models may comprises a plurality of neural networks. Each neural network in the plurality of neural networks may be configured to identify local features of a respective feature identity type. The one or machine-learned local feature identification models may comprise a plurality of region-based convolutional neural networks.

The candidate objects may comprise land vehicles. The local feature identities for the land vehicles may comprise one or more of: a wheel; a wind shield; a turret; a weapon system; an exhaust; tracks; a bumper; and/or an antenna.

The candidate objects may comprise aircraft. The local feature identities for the aircraft may comprise one or more of: a wing; landing gear; an engine; a canopy; a tail; a nose; a jet pipe; pods; a weapon system; and/or fore-planes

The candidate objects may comprise maritime vehicles. The local feature identities for the maritime vehicles may comprise one or more of: a superstructure element; a turret; a smoke stack; a weapon system; a bridge; a radar array; and/or a helipad.

The method may further comprise: estimating an object scale of the object in the image; and scaling the masked images of candidate objects based on the estimated object scale. Estimating the object scale of the object in the image may be based on one or more background or foreground objects in the image. Estimating the object scale of the object in the image may be based on a known geographic location of the image.

Identifying the plurality of local features of an object in the image may comprise: identifying a plurality of local feature locations in the image using the one or more machine-learned local feature identification models; clustering the plurality of identified local features in the image using a clustering algorithm; and selecting a cluster of the identified local features as the plurality of local features of the object in the image.

According to a further aspect of the invention, there is provided a computer program product comprising computer readable instructions that, when executed by a computer, cause the computer to perform any one or more of the methods described herein.

According to a further aspect of the invention, there is provided apparatus comprising one or more processors and a memory, the memory storing computer readable instructions that, when executed by the one or more processors, cause the apparatus to perform any one or more of the methods described herein. According to a further aspect of the invention, there is provided a system comprising: one or more imaging sensors; one or more processors; and a memory, the memory storing computer readable instructions that, when executed by the one or more processors, cause the apparatus to perform any one or more of the methods described herein.

BRIEF DESCRIPTION OF THE FIGURES

Embodiments of the invention will now be described by way of example only with reference to the figures, in which:

> Figure 1 shows a schematic overview of a method for object recognition/detection in images;
> Figure 2 shows an example of determining an Intersection Over Union measure;
> Figure 3 shows an overview of a low-shot learning and execution method for updating an image classification model;
> Figure 4 shows a flow diagram of an example method for identifying objects in images; and
> Figure 5 shows a schematic overview of an computer system/apparatus for performing any of the methods described herein.

DETAILED DESCRIPTION

This specification describes systems, apparatus and methods for object recognition in images. The object recognition techniques described herein use a combination of machine-learned feature detection models and masked images generated from 3D object models to identify objects in an image. Local features of an object in an image and their locations are identified using one or more machine-learned models. These identified local features are compared with known feature identities and locations in sets of masked images of objects based on how much they overlap in order to determine a candidate object that best matches the identified local features.

tures.

The systems, apparatus and methods described herein follow a hybrid approach, which in some embodiments may be referred to as neuro-geo-symbolic. The front end of what is a multi-stage process is carried out by one or more machine learning models, which identify local features of interest in an image and generate prediction bounding boxes and, in some embodiments, a confidence value across the relevant parts of a test or target image. In some embodiments, a federated network of region-based convolutional neural networks (R-CNNs) may be used to detect the local features, each of which is trained to detect a particular local feature type (e.g. wheels, weapons, bumpers, windscreens, fuel tanks and so on).

The geometric and symbolic stage effectively weighs up whether the predicted local features are in the right place relative to one another by a cumulative scoring process using a set of 3D rendering tool-generated segmentation image masks (which serve as 'feasible search zones') for each object class over a set of pose (or observation) angles and, in some embodiments, scales. The scores are based on an overlap between the predicted local features in the image and feasible search zones of local features in the segmentation image masks. The scores may, in some embodiments, be based on an IOU-confidence product sum for each of the local features sought after or expected, where IOU is intersection over union measure, (i.e. comparing that predicted by the deep learning stage and the expectations represented by the segmented image masks). These may be added together to form an overall score for each of the segmented image masks. This results in a ranking table in which the highest score represents the predicted object class and the predicted object pose angle.

In this manner, objects in images can be identified in an explainable way that is robust to adversarial attack, high object class variance, scale, and partial occlusion.

Attack vectors such as adversarial noise and imagery may have a limited effect on the techniques described herein for several reasons. First is that adversarial noise would need to affect several feature detector models (e.g. multiple R-CNNs in the federated network) and at a local feature level within the image. This would be an arduous task for the adversary even if they had access to the trained models and would likely still be outweighed by the mathematics in the process. Second, although an adversary could introduce adversarial imagery as markings on objects (e.g. vehicles) they would effectively be out-weighted by 'real' local features, as well as not aligning with expectations (represented by the segmented image masks used in the process).

High object variance within a class may also be accommodated within the techniques described herein. For example, defence objects of interest may have differing colours, camouflage, weapons and other topological manifolds applied as well as sometimes covered in dirt and detritus within a class. For example, a specific type of main battle tank may be fitted with fences (i.e. counter-RPG and counter anti-armour weapons), may have small arms fitted, and/or be in a desert camouflage rather than urban. This variance within a class significantly challenges deep learning image classifiers (pixel correlators) and significantly drives up the need for vast training datasets. However, because the models described herein focus on local features, which rarely change despite the aforementioned causes, and their relative positions, a degree of robustness may be present.

The effects of partial occlusion of objects in images may also be reduced. If an object is partially occluded, key local features may still be visible and detected, and a high accuracy classification still made. This is because the ranking table and calculations are all relative, based around what can be observed, rather than suffer from what is missing and expected. By contrast, the occlusion problem is expected to cause significant problems for existing deep neural network classifiers.

The techniques described herein may also facilitate low-shot learning to incorporate new objects into a classifier, without the need for costly retraining of machine-learning models or large datasets of examples of the new object. This may arise as a result of the deep learning stage not being directly responsible for classifying the object. It is the geo-symbolic phase that classifies the observed object. This opens the door for simple solutions that can classify new object classes insomuch as what decides the classification is the presence or absence of distinguishing local features, and, their expected relative positions, and which does not require retraining of a large and greedy machine-learning model.

This may be accomplished as follows. A user takes a single new real world image, or few images, of a new object class and builds a 3D representation of it, segmenting local features, for example by assigning a unique RGB value to each of them. This is a relatively trivial process taking a few tens of minutes at worst for a strong amateur modeller. Using a 3D modelling tool and predefined camera paths a dataset of segmented image masks may be generated for this new class and added to the overall dataset of masks. This may be accomplished in under a few minutes of execution time. Any new image that is subsequently provided for analysis/classification containing the new class would be classified successfully since it is now represented in dataset used by the geo-symbolic stage of the model. What this has achieved is a process for providing classifications based upon what amounts to a one-shot or few shot learning capability.

Furthermore, some of the methods described herein allow for a large degree of parallelisation, improving the speed of object classification at inference time. Using a federated approach with multiple machine learning models, the local feature identification stage can be executed across parallel processing units and therefore speed up the detection of local features This is also true for the geo-symbolic model since it can be readily parallelised insomuch as each computational element can be given one or more of the segmentation image masks from which to compute a ranking score.

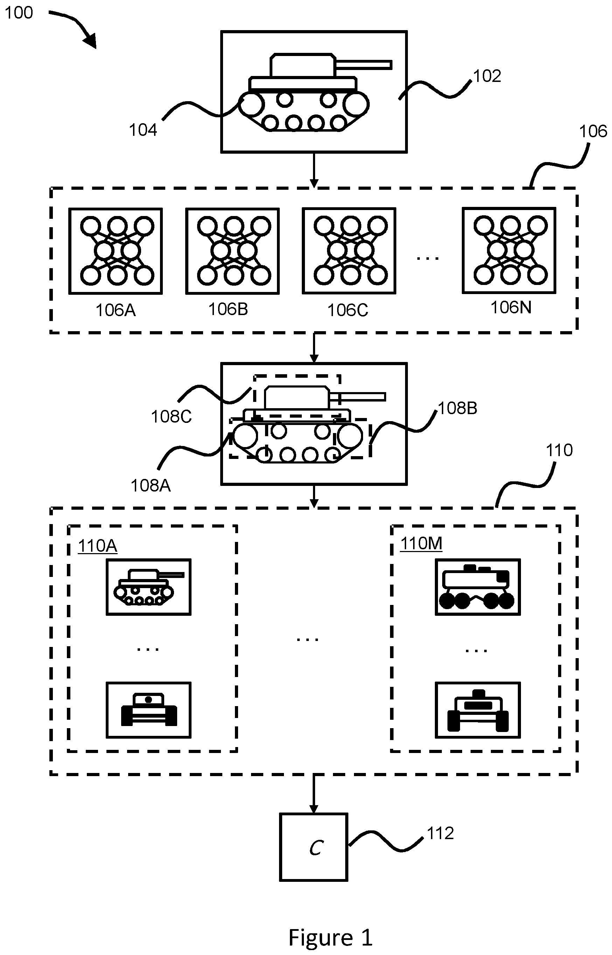

Figure 1 shows a schematic overview of a method 100 for object recognition/detection in images. The method may be performed by one or more computers operating in one or more locations.

An image 102 containing an object 104 to be identified is input into one or more machine-learned local feature identification models 106. The one or more machine-learned local feature identification models 106 process the input image 102 to identify one or more local features 108A-C present in the image, as well as their respective locations. The identified local features 108A-C and their corresponding locations are output from the one or more machine-learned local feature identification models 106. In some embodiments, a confidence score for each identified local feature is also output by the one or more machine-learned local feature identification models 106. The identified local features 108A-C are compared to masked images of candidate objects in a plurality of sets of masked images 110A-M to determine a classification output 112 for the input image 102 indicative of an object type of the object 104 in the input image 102.

The one or more machine-learned local feature identification models 106 may comprise a plurality of local feature identification models 106A-N, each of which is specialised (e.g. as been trained) for detecting and locating local features of a pre-defined type. Each model 106 may take as input the input image 102, or a region of the input image, and identify the presence/absence of local features of the type associated with the model. If local features of that type are present, their locations are also identified.

The one or more machine-learned local feature identification models 106 may comprise one or more neural network models. The one or more neural network models may comprise one or more region-based convolutional neural networks (R-CNNs). R-CNNs are neural networks that combine region proposals with convolutional neural network features. In some embodiments, a plurality of R-CNNs are used, each of which has been trained to detect (e.g. identify and locate) local features of a particular pre-defined local feature class. In some implementations, image registration may be used to centre the object in the image.

Local features 108A-C comprise pre-defined classes of sub-features of objects (also referred to herein as "pre-defined local feature classes"). For example, where the method is being used to identify vehicles in images, the local features may comprise elements of a vehicle. For example, for a land vehicle, the classes of local feature may comprise: wheels; windscreens; windows/viewing slits; exhausts; tracks; weapon systems; turrets; engine grills; antennae; or the like. For a marine vehicle, the classes of local feature may comprise: smoke stacks; hull features; bridges; antennae; radar arrays; weapon systems; landing pads; or the like. For an aircraft, the classes of local feature may comprise: engines; air intakes; nose cones; weapon mounts; weapons systems; tails; wings; fins; cockpits; or the like.

Each local feature 108A-C identified in the image 102 is associated with a corresponding feature identity and feature location. The feature identity identifies which of the plurality of pre-defined local feature classes that local feature 108A-C belongs to. A feature location indicates an area of the image in which the associated local feature is found. It may, for example, be in the form of a bounding box around the identified local feature. Alternatively, an outline of the identified local feature may be used as the feature location, or a centre point of the feature may be identified as the feature location.

The identified local features 108A-C are then compared to local features in sets of masked images 110. Each set of masked images 110A-M comprises masked images of a candidate object from a plurality of different viewing angles and, in some embodiments, at different scales/viewing distances. Each set of masked images 110A-M may be derived from a respective three-dimensional model of the object to which it corresponds. Comparisons for each identified local feature 108A-C may, in some embodiments, be performed in parallel. Furthermore, each masked image and/or set of masked images may be processed in parallel.

Each masked image comprises a set of feasible search zones for local features of the object in the image. Local feature types may be encoded in the masked image using an RGB encoding, in which each feature type is assigned a respective colour, and feasible search zones for local features are coloured with their respective feature colour in the masked image. For example, the feasible search zones for each wheel-type object may be coloured red in the masked image, and the feasible search zones for each window-type object may be coloured yellow.

The comparison of the identified local features 108A-C to masked images of candidate objects in a plurality of sets of masked images 110 may be performed based on an overlap between the feature locations of the identified local features 108A-C and the feasible search zones defined by the local features in the masked images 110. For example, where the feature locations of the identified local features 108A-C are defined by bounding boxes, a measure of the overlap between said bounding boxes and the feasible search zones in the masked images may be used to perform the comparison.

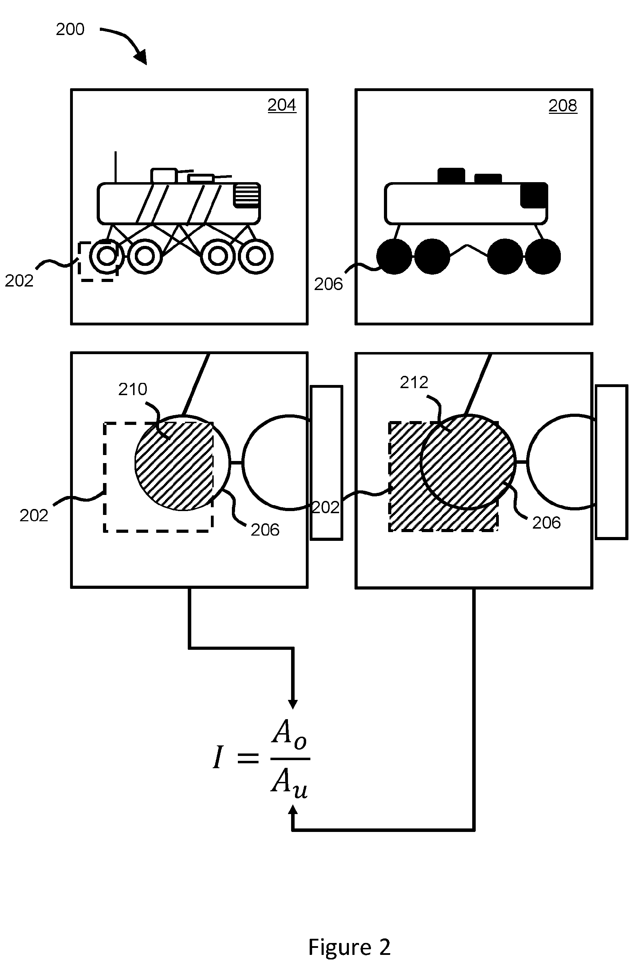

An example of such a measure is the intersection over union (IOU) measure. The IOU measure for two objects is given by the area of overlap between the two objects divided by the total area covered by both objects, i.e. the area of overlap between the two objects plus the area that doesn't overlap. Figure 2 shows an example method 200 of determining the IOU of a local feature (in this example, a wheel) 202 identified in an input image 204 with a feasible search zone 206 in a masked image 208. The local feature 202 in the input image 204 has a feature location defined by a bounding box. The feasible search zone 206 in the masked image 208 is defined by an outline of a region in which that local feature may be present.

An area of intersection 210 is determined by taking the intersection between the area of the identified local feature 202 and the feasible search zone 206 in the masked image. An area of union 212 is determined by taking the union between the area of the identified local feature 202 and the feasible search zone 206. The IOU between the local feature 202 and the feasible search zone 206 is given by the area of intersection 210 divided by the area of union 212. Mathematically, the IOU, $I$, between two objects is given by:

$$I = \frac{A_o}{A_u}$$

Where $A_o$ is the area of intersection between the two objects and $A_u$ is the area of union between the two objects. A perfect score of 1 is achieved when the two objects overlap exactly.

Returning to Figure 1, each local feature prediction for a particular local feature type is compared with the corresponding FSZ (for the same local feature class) and the IOU computed. The comparison of the identified local features 108A-C to masked images of candidate objects is performed based on sums of these IOUs.

The comparison may, in some embodiments, be performed using a weighted sum of IOUs for the identified local features 108A-C in the image 102. The weightings may be based on a confidence score associated with the identified local feature that is output by the machine-learned model 106. For example, for a local feature type $i$, a weighted IOU sum for that feature type may be given by:

$$S_i = \sum_{j=1}^{m} I_j C_j$$

where $I_j$ is the IOU score for the j-th local feature 108A-C, $C_j$ is the corresponding confidence score for the j-th local feature and m is the total number of local features of type $i$ identified in the image. An overall score, $T_c$, for a candidate object, $c$, may be calculated as a sum over all local feature classes, $i$, of this weighted sum.

Alternatively or additionally, the weighting may be based on a feature weighting, $W_i$. The feature weighting assigns a relative importance to each class of local features. For example, given the ubiquity of wheels on vehicles, wheel-type local features may be given a lower weighting than, say weapon-type local features. Where a confidence weighting has also been used, the weighted sum of IOUs for a candidate object, *c,* may be given by:

$$T_c = \sum_{i=1}^{n} W_i S_i$$

where $W_i$ is the feature weighting, $S_i$ is the confidence-weighted feature sum, and *i* labels the feature class.

The classification output 112, *C,* may comprise the identity of the candidate object with the highest scoring masked image in the plurality of sets of masked images 110. Alternatively, the classification output 112 may comprise a list of the top *N* scoring candidate objects. *N* may, for example, be between 5 and 20, e.g. 10.

In some implementations, a feature logic may be applied prior to the comparison of the identified local features 108 to the plurality of sets of masked images 110. The feature logic eliminates candidate objects from the comparison based on the identified local features 108. For example, if a particular feature is identified as being present, then sets of masked images 110 corresponding to objects without that feature are not used for the comparison. In effect, a subset comprising sets of masked images of objects with the identified feature is identified and used for the comparison.

The feature logic may also account for the number of local features of particular type that are identified in the image. For example, if six wheels are identified, then only sets of masked images with objects having at least six wheels are used in the comparison.

The combination of the feature logic and the feature comparison process may be referred to herein as the "geo-symbolic model".

In some implementations, local features may be identified that do not belong to the object 104, e.g. that belong to other objects present in the image. To address this, a clustering algorithm may be applied to the identified local features in the image 102 to collect them into a plurality of clusters. One or more of these clusters may be chosen to be the local features of the object to be identified.

For example, in the cases where objects 104 in the image 102 are separated (i.e., do not overlap with one another) then a clustering method could be utilised, such as k-nearest neighbours or SVM based upon relative proximity of local feature prediction bounding boxes. Groups of local feature predictions within close proximity of one another may be deemed to be a cluster and thus belong to a single object. It is this prediction data which would be utilised by the geo-symbolic model post registration process and each cluster of predictions being addressed separately since they correspond to different vehicles. This method may mitigate the issue of false positive local feature predictions caused by complex and cluttered environmental backgrounds, since a lone local feature prediction or local feature predictions of only the same class could be ignored.

The clustering method may be further augmented by knowing the variance of object sizes in image in pixel terms. For example, some feature predictions may be discarded because they are located too far away from the centroid of local feature predictions to be considered as belonging to the object in question (i.e. the object being classified). Thus they must belong to another object or are simply false positive detections from features in the local environment. The threshold distance from the object centroid used to determine which local features to discard may be based on the maximum size of a candidate object in the set of candidate objects that is consistent with the identified local features.

Such local feature discarding may be achieved by knowledge of the distance subtended by an image pixel at the object location, given that imaging sensor resolution and field of view are known and thus the instantaneous field of view is known via calculation (i.e. the instantaneous field of view is the field of view projected from a single detector pixel corresponding to an image pixel hence one simply divides the sensor total field of view by the detector resolution in one of the detector's dimensions). The imaging sensor pointing direction may also be known (e.g. through angular transducers on the sensor assembly if not fixed in a fixed pointing direction relative to the platform, and, platform position and attitude which is arrived at through a navigation and guidance system). The range between the platform and the object may then be determined using the intersection of the sensor sightline (boresight) with a digital terrain model. The distance corresponding to a pixel can be approximately calculated in each dimension of horizontal and vertical by appealing to small angle theory (i.e. range x IFOV angle in radians). Form this, the distances between local features in the image may be estimated.

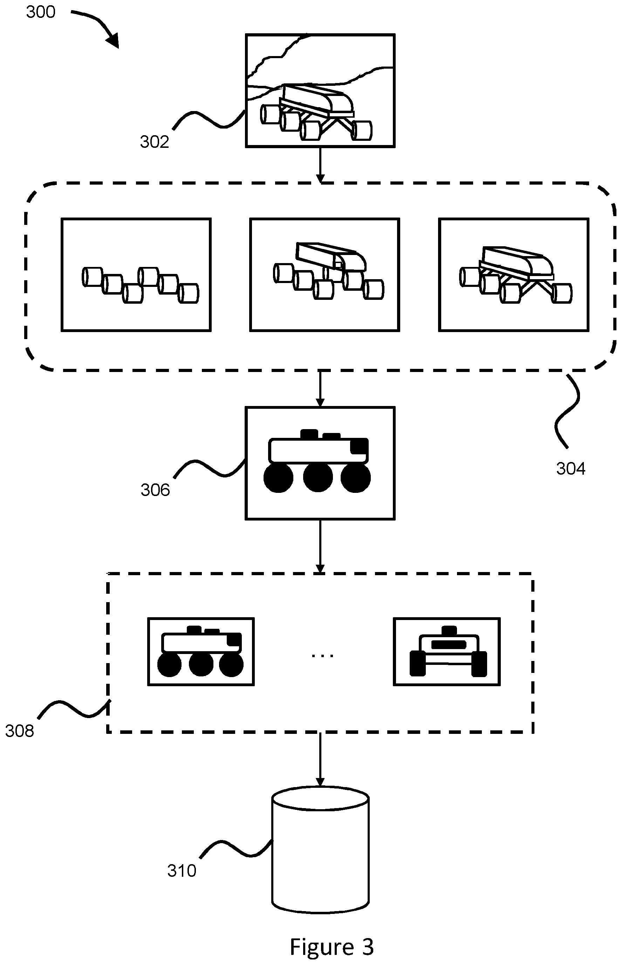

Figure 3 shows an overview of a low-shot learning method 300 for updating an image classification model. One or more images 302 of an object corresponding to a new object class are obtained. From these images 302 a three-dimensional model 304 of the object in the images is generated. The three-dimensional model may be composed of primitives, at least some of which may correspond to local features of the object. Features in the three-dimensional model may be inferred that are not present in the image itself, such as the position of wheels that are obscured in the image. Symmetry considerations may be used to infer the positions and/or types of such features.

Local features 306 in the three-dimensional model 304 are identified. This may be performed manually, using feature identification models, or by construction (e.g. the use of primitives corresponding to local features, as described above). The local features may, for example, be colour coded by feature type. The colour coding may be based on a look-up table.

Based on the three-dimensional model 304 and the identified local features 306, a plurality of masked images 308 of the object are generated, each corresponding to a two-dimensional view of the three-dimensional model from a different angle and/or at a different scale/viewing distance. The masked images 308 each indicate the feasible search zones for local features of the object when the object is viewed from that angle and/or distance.

The plurality of masked images 308 are then stored in a memory/database 310 as a new set of masked images for use in object classification, as described above in relation to Figure 1.

In this manner, newly observed objects can be added to the image classification method based on only one image (or a small number of images) of an object in a new image class. Expensive retraining of deep learning models is not required.

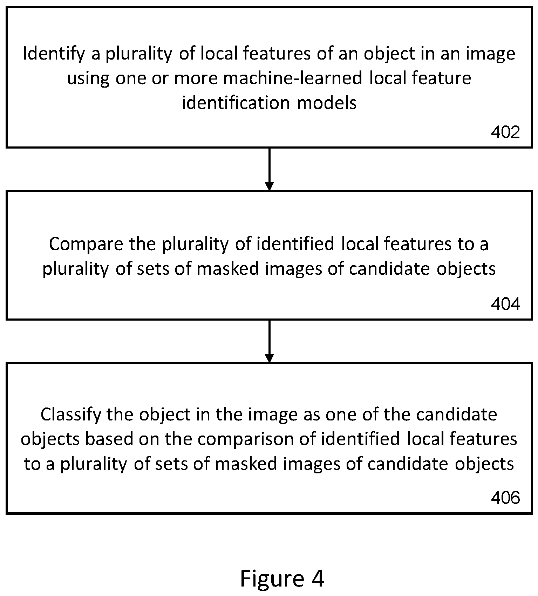

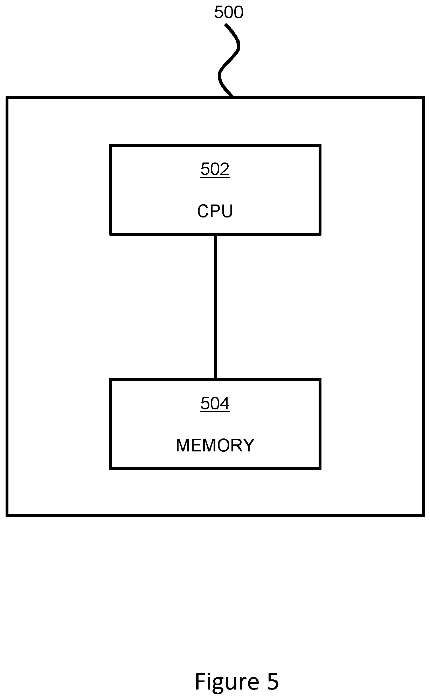

Figure 4 shows a flow diagram of an example method for identifying objects in images. The method may be performed by a computing system, such as the system described in relation to Figure 5. The method corresponds to the methods described above in relation to Figures 1-3.

At operation 402, a plurality of local features of an object in the image are identified using one or more machine-learned local feature identification models (e.g. a plurality of neural networks, such as R-CNNs). Each local feature is associated with a respective feature identity and a respective feature area (i.e. its location in the image).

Each machine-learned local feature identification model takes as input the image, or a part of the image, and processes it according to a set of learned parameters to generate output indicative of a feature identity and area. Each machine-learned local feature identification model may be specialised in detecting features of a particular type.

The one or more machine-learned local feature identification models may be neural networks. For example, the one or more machine-learned local feature identification models may be R-CNNs.

The feature area may be represented as a bounding box around the identified local feature. Alternatively, an outline of the feature may be used.

In some implementations, a confidence score for each identified local feature may also be output from the one or more machine-learned local feature identification models.

In some implementations, local features not belonging to the object may be identified. To reduce the effect of these, a clustering algorithm may be applied to cluster identified local features, and a subset of clusters selected to be the plurality of local features of the object. Identification of local features not belonging to the object may further be based on knowledge of the subtended pixel areas for all object classes of interest, as described above in relation to Figure 2.

At operation 404, the plurality of identified local features are compared to a plurality of sets of masked images of candidate objects. Each set of masked images corresponds to a respective candidate object, and comprises a plurality of masked images of the respective candidate object from a plurality of viewing angles. Each masked image comprises a plurality of feasible search zones of local features of the candidate object, each local feature comprising a respective feature identity and a respective feature area (i.e. its location in the image). The comparison is based on an overlap between the identified local features in the image and local features of the candidate object in the masked image.

The overlap between the identified local features in the image and local features of the candidate object may be based on an intersection over union measure, as described above in relation to Figure 2. A weighted sum of intersection over union measures may be taken for each masked image to generate a score for the image indicative of how well the image fits the identified features. The weights in the sum may be based on one or more of: a confidence value for each identified local feature; and/or a feature weight for each local feature type, the feature weight indicative of a relative importance of the corresponding feature type. This can enhance the explainability of the class prediction, since the contributions of each IOU, and thus the local features, is known and may be presented to a user.

In some implementations, the plurality of sets of masked images of candidate objects are selected from a larger set (a superset) of sets of masked images of candidate objects based on the identified local features. For example, if a particular type of local feature is identified as being present, then sets of masked images corresponding to objects without that local feature may be excluded from the comparison. This can increase the computational efficiency of the method, resulting is a faster classification and/or using less computational resources (e.g. memory, processing power) to perform the classification.

In some implementations, the masked images of candidate objects may be scaled based on an estimated object scale prior to performing the comparison. The object scale may be estimated from properties of the input image, such as known sizes (or size ranges) of objects in the background or foreground of the image. Alternatively or additionally the object scale may be estimated based on a known geographic location of the image, e.g. by comparing the object to positions and/or sizes of known geographic features in the image.

At operation 404, the object in the image is classified as one of the candidate objects based on the comparison of identified local features to a plurality of sets of masked images of candidate objects. The identification may be the identity of the candidate object with a masked image that best matches the local features identified in the image (e.g. has the highest score based on a weighted sum of overlap scores). Alternatively, the identification may be in the form of a set of scores for candidate objects, indicating how closely they match the local feature in the input image.

The candidate objects may comprise land vehicles. The local feature identities for the land vehicles may comprise one or more of: a wheel; a wind shield; a turret; a weapon system; an exhaust; tracks; a bumper; and/or an antenna. The candidate objects may comprise aircraft. The local feature identities for the aircraft may comprise one or more of: a wing; landing gear; an engine; a canopy; a tail; a nose; a jet pipe; pods; a weapon system; a propeller; and/or fore-planes. The candidate objects may comprise maritime vehicles. The local feature identities for the maritime vehicles may comprise one or more of: a superstructure element; a turret; a smoke stack; a weapon system; a bridge; a radar array; a periscope; and/or a helipad.

If an object in an image does not correspond to a known candidate object, then the classification method may be updated based on the image. A three-dimensional model of a further candidate object may be constructed based on the object in the image. From the three-dimensional model, a set of masked images of the further candidate object are generated. The set comprises a plurality of masked images of the further candidate object, each masked image comprising a plurality of local features of the further candidate object, each local feature comprising a respective feature identity and a respective feature area. The set of masked images of the further candidate object are then added to the plurality of sets of masked images of candidate objects.

Figure 5 shows a schematic overview of an computer system/apparatus 500 for performing any of the methods described herein. The system/apparatus 500 may be a distributed system.

The apparatus (or system) 500 comprises one or more processors 502. The one or more processors control operation of other components of the system/apparatus 500. The one or more processors 502 may, for example, comprise a general-purpose processor. The one or more processors 502 may be a single core device or a multiple core device. The one or more processors 502 may comprise a Central Processing Unit (CPU) or a graphical processing unit (GPU). Alternatively, the one or more processors 502 may comprise specialised processing hardware, for instance a RISC processor or programmable hardware with embedded firmware. Multiple processors may be included.

The system/apparatus comprises a memory 504. The memory 504 may comprise a working or volatile memory. The one or more processors may access the volatile memory in order to process data and may control the storage of data in memory. The volatile memory may comprise RAM of any type, for example Static RAM (SRAM), Dynamic RAM (DRAM), or it may comprise Flash memory, such as an SD-Card.

The memory 504 may further comprise a non-volatile memory. The non-volatile memory stores a set of operation instructions for controlling the operation of the processors 502 in the form of computer readable instructions. The non-volatile memory may be a memory of any kind such as a Read Only Memory (ROM), a Flash memory or a magnetic drive memory.

The one or more processors 502 are configured to execute operating instructions to cause the system/apparatus to perform any of the methods described herein. The operating instructions may comprise code (i.e. drivers) relating to the hardware components of the system/apparatus 500, as well as code relating to the basic operation of the system/apparatus 500. Generally speaking, the one or more processors 502 execute one or more instructions of the operating instructions, which are stored permanently or semi-permanently in the non-volatile memory, using the volatile memory to store temporarily data generated during execution of said operating instructions.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 6, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims.

**Claims**

1. A computer implemented method of classifying an object in an image, the method comprising:

   identifying (502), using one or more machine-learned local feature identification models (106), a plurality of local features (108) of an object (104) in the image (102), each local feature comprising a respective feature identity and a respective feature area;

comparing (504) the plurality of identified local features to a plurality of sets of masked images (110) of candidate objects, wherein:

each set of masked images corresponds to a respective candidate object and comprises a plurality of masked images of the respective candidate object from a plurality of viewing angles;
each masked image comprises a plurality of feasible search zones for local features of the candidate object; and
the comparison of the plurality of local features to a masked image of a candidate object is based on an overlap between the identified local features and feasible search zones of said candidate object in the masked image;

classifying (506) the object in the image as one of the candidate objects based on the comparison of identified local features to a plurality of sets of masked images of candidate objects.

2. The method of claim 1, wherein the comparison of the plurality of local features (108) to a masked image of a candidate object is based on a weighted sum of overlap scores.

3. The method of claim 2, wherein weights of the weighted sum are based at least in part on a feature weighting indicative of a relative importance of each local feature type.

4. The method of any of claims 2 or 3, wherein:

identifying the plurality of local features (108) of an object (104) in image (102) further comprises determining a confidence score for each of the local features; and
weights of the weighted sum are based at least in part on the confidence scores for the identified of local features.

5. The method of any preceding claim, wherein the comparison of the plurality of local features (108) to a masked image of a candidate object is based on an intersection over union measure.

6. The method of any preceding claim, wherein the feature area associated with each local feature (108) comprises a bounding box of the local feature.

7. The method of any preceding claim, wherein each set of masked images (110) comprises a plurality of masked images of the respective candidate object at a plurality of viewing distances.

8. The method of any preceding claim, further comprising selecting the plurality of sets of masked images (110) of candidate objects from a superset of sets of masked images of candidate objects based on the identities of local features (108) identified in the image (102).

9. The method of any preceding claim, further comprising:

constructing a three-dimensional model (404) of a further candidate object;
generating, from the three-dimensional model, a set of masked images (408) of the further candidate object, the set comprising a plurality of masked images of the further candidate object, each masked image comprises a plurality of local features of the further candidate object, each local feature comprising a respective feature identity and a respective feature area; and
adding the set of masked images of the further candidate object to the plurality of sets of masked images of candidate objects.

10. The method of any preceding claim, wherein the one or more machine-learned local feature identification models comprises a plurality of neural networks, and wherein each neural network in the plurality of neural networks is configured to identify local features of a respective feature identity type.

11. The method of claim 10, wherein the one or machine-learned local feature identification models comprises a plurality of region-based convolutional neural networks.

12. The method of any preceding claim, wherein the candidate objects are vehicles, and wherein the local feature identities comprise one or more of: a wheel; a wind shield; a weapon system; an exhaust; tracks; a bumper; an antenna; a wing; landing gear; an engine; a canopy; a tail; a nose; a jet pipe; pods; and/or fore-planes .

13. A computer program product comprising computer readable instructions that, when executed by a computer, cause the computer to perform the method of any preceding claim.

14. Apparatus comprising one or more processors and a memory, the memory storing computer readable instructions that, when executed by the one or more processors, cause the apparatus to perform the method of any of claims 1 to 12.

15. A system comprising:

one or more imaging sensors;

one or more processors; and
a memory, the memory storing computer readable instructions that, when executed by the one or more processors, cause the apparatus to perform the method of any of claims 1 to 12.

Figure 1

Figure 2

300

302

304

306

308

310

Figure 3

Identify a plurality of local features of an object in an image
using one or more machine-learned local feature
identification models

402

Compare the plurality of identified local features to a
plurality of sets of masked images of candidate objects

404

Classify the object in the image as one of the candidate
objects based on the comparison of identified local features
to a plurality of sets of masked images of candidate objects

406

Figure 4

500

502

CPU

504

MEMORY

Figure 5

Europäisches
Patentamt

European
Patent Office

Office européen
des brevets

# EUROPEAN SEARCH REPORT

Application Number

EP 23 27 5010

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/155011 A1 (SULC MILAN [CZ] ET AL) 2 June 2016 (2016-06-02) <br> * paragraph [0001] - paragraph [0003] * <br> * paragraph [0007] * <br> * paragraph [0014] - paragraph [0017] * <br> * paragraph [0022] - paragraph [0023] * <br> * paragraph [0026] * <br> * paragraph [0028] * <br> * paragraph [0030] - paragraph [0036] * <br> * paragraph [0042] - paragraph [0051] * <br> * paragraph [0058] - paragraph [0061] * <br> * paragraph [0064] * <br> * paragraph [0067] - paragraph [0069] * <br> * paragraph [0072] * <br> * paragraph [0087] - paragraph [0088] * | 1-15 | INV. <br> G06V10/75 <br> G06V10/774 |
| X | WO 2022/023787 A1 (ERICSSON TELEFON AB L M [SE]) 3 February 2022 (2022-02-03) <br> * paragraph [0001] - paragraph [0005]; figure 6a * <br> * paragraph [0007] * <br> * paragraph [0042] - paragraph [0044] * <br> * paragraph [0050] - paragraph [0052] * <br> * paragraph [0056] * <br> * paragraph [0059] * <br> * paragraph [0064] * <br> * paragraph [0071] * | 1-15 | |
| A | US 2017/178335 A1 (PAVANI SRI KAUSHIK [IN] ET AL) 22 June 2017 (2017-06-22) <br> * the whole document * | 1-15 | TECHNICAL FIELDS SEARCHED (IPC) <br><br> G06V |

The present search report has been drawn up for all claims

| Place of search | Date of completion of the search | Examiner |
|---|---|---|
| The Hague | 10 May 2023 | de Castro Palomares |

EPO FORM 1503 03.82 (P04C01)

## ANNEX TO THE EUROPEAN SEARCH REPORT
## ON EUROPEAN PATENT APPLICATION NO.

EP 23 27 5010

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2023

| Patent document cited in search report | | Publication date | Patent family member(s) | | Publication date |
|---|---|---|---|---|---|
| US 2016155011 | A1 | 02-06-2016 | NONE | | |
| WO 2022023787 | A1 | 03-02-2022 | EP | 4189584 A1 | 07-06-2023 |
| | | | WO | 2022023787 A1 | 03-02-2022 |
| US 2017178335 | A1 | 22-06-2017 | NONE | | |

EPO FORM P0459

For more details about this annex : see Official Journal of the European Patent Office, No. 12/82